**Europäisches Patentamt**

**European Patent Office**

**Office européen des brevets**

(19)

(11) Veröffentlichungsnummer: **0 129 758**

**B1**

(12)

# EUROPÄISCHE PATENTSCHRIFT

(45) Veröffentlichungstag der Patentschrift:
18.03.87

(51) Int. Cl.⁴: **A 01 B 59/041**

(21) Anmeldenummer: **84106630.1**

(22) Anmeldetag: **09.06.84**

(54) Adapter zum Ausschalten der Seitenbeweglichkeit von Unterlenkern eines Ackerschleppers.

(30) Priorität: **23.06.83 DE 3322551**

(43) Veröffentlichungstag der Anmeldung:
**02.01.85 Patentblatt 85/1**

(45) Bekanntmachung des Hinweises auf die Patenterteilung:
**18.03.87 Patentblatt 87/12**

(84) Benannte Vertragsstaaten:
**AT BE CH DE FR GB IT LI NL SE**

(56) Entgegenhaltungen:
**DE-A-2 216 652**
**US-A-3 047 076**
**US-A-3 627 060**
**US-A-3 847 228**

(73) Patentinhaber: **DEERE & COMPANY, 1 John Deere Road, Moline Illinois 61265 (US)**

(72) Erfinder: **Teich, Christian Michael, Ing.- grad., Rheinparkstrasse 2, D-6800 Mannheim 1 (DE)**

(74) Vertreter: **Feldmann, Bernhard, DEERE & COMPANY European Office, Patent Department Steubenstrasse 36- 42 Postfach 503, D-6800 Mannheim 1 (DE)**

EP 0 129 758 B1

## Beschreibung

Die Erfindung bezieht sich auf eine Vorrichtung zum Ausschalten der Seitenbeweglichkeit von Unterlenkern, die dem wahlweisen Anschließen von Geräten mit unterschiedlichen Anschlußmaßen an einen Ackerschlepper dienen, oder dergleichen, mit einem Adapter, der an dem Ackerschlepper zur Anlage bringbar ist, und mit einem Befestigungsmittel, wobei der Adapter in der Form eines Ringes mit unterschiedlichen Wandstärken ausgebildet ist, so daß er einen Unterlenker umgreifen kann, und in mindestens zwei Stellungen gegenüber dem Unterlenker drehbar, verschiebbar und in jeder Stellung mittels des Befestigungsmittels auf dem Unterlenker festlegbar ist.

Dieser bekannte Adapter (US-A-3 627 060) besteht aus zwei gelenkig miteinander verbundenen Hälften, die jeweils eine andere Wandstärke aufweisen, wobei die eine Wandstärke den Abstand des Unterlenkers von einer an dem Ackerschlepper angebauten Konsole bzw. vom Ackerschlepper selbst zu dem Unterlenker bei der Verwendung von Geräten mit weiten Anschlußmaßen bestimmt, während die andere Wandstärke den vorbeschriebenen Abstand bei der Verwendung von Geräten mit engen Anschlußmaßen bestimmt. Diese beiden Hälften umgreifen den Unterlenker und werden auf ihm mittels einer Klemmschraube gehalten. Außerdem greifen an der Innenseite der beiden Hälften angebrachte Nocken in entsprechende Vertiefungen auf dem Unterlenker ein und verhindern somit eine Dreh- bzw. Längsbewegung des Adapters auf dem Unterlenker. Als Nachteil bei dieser Ausführung muß angesehen werden, daß der Adapter von dem Unterlenker vollkommen gelöst werden muß, wenn er so gedreht werden soll, daß die eine oder die andere Wandstärke den Abstand der Unterlenker zu dem Ackerschlepper oder der an ihm angebrachten Konsole bestimmen soll. Nach dem Lösen der Klemmschraube muß der Adapter nämlich wieder neu auf dem Unterlenker positioniert und mit der Klemmschraube befestigt werden, was Unsicherheiten bezüglich des Auffindens der jeweiligen Stellung in sich birgt, die durch die Einwirkung von Schmutz, Rost und Sand auf das Gelenk und die Vertiefungen in den Unterlenkern zu stets ungenauer werdenden Stellungen führen.

Die US-A-3 847 228 offenbart eine Vorrichtung zum Ausschalten der Seitenbeweglichkeit mit einem Adapter, der nicht auf dem Unterlenker gedreht werden kann, sondern der von diesem vollkommen gelöst werden muß, um dann frei im Raum gedreht werden zu können. Dadurch, daß er von dem Unterlenker losgelöst wird, unterliegt er der Gefahr des Verlorengehens. Außerdem sind zu seiner Demontage Werkzeuge erforderlich, und die verwendeten Schrauben werden innerhalb kurzer Zeit unter den widrigen landwirtschaftlichen Einsatzverhältnissen schwergängig.

Schließlich zeigt die US-A-3 047 076 eine Vorrichtung zum Ausschalten der Seitenbeweglichkeit von Unterlenkern, die jedoch nicht dem wahlweisen Anschließen von Geräten mit unterschiedlichen Anschlußmaßen an einen Ackerschlepper dient. Vielmehr zeigt dieses Dokument eine Führungsrolle, die entlang der Längsachse des Unterlenkers in zwei Stellungen festlegbar ist. Bei der Entnahme bzw. dem Fortfall der mit dieser Führungsrolle verbundenen Befestigungsmittel kann die Führungsrolle ebenfalls verlorengehen, und die Funktion der Vorrichtung zum Ausschalten der Seitenbeweglichkeit ist nicht mehr gegeben.

Die der Erfindung zugrunde liegende Aufgabe wird darin gesehen, die Vorrichtung zum Ausschalten der Seitenbeweglichkeit von Unterlenkern derart zu verbessern, daß der ihr zugehörige Adapter auf einfache Weise in seine jeweilige Stellung bringbar ist und beim Verstellen nicht verlorengehen kann.

Diese Aufgabe ist erfindungsgemäß dadurch gelöst worden, daß der Adapter einstückig ist und eine Längsbohrung aufweist, die in ihrem Querschnitt ungefähr dem größten Querschnitt des Unterlenkers entspricht, so daß er den Unterlenker umgebend relativ spielfrei auf ihm um seine Längsachse drehbar und entlang dieser verschiebbar ist, und daß das Befestigungsmittel formschlüssig ausgebildet und ohne Werkzeug demontierbar ist.

Auf diese Weise verbleibt der Adapter stets auf dem Unterlenker und kann von einer Stellung in eine andere Stellung in einfachster Weise, und ohne die neue Stellung zunächst feststellen zu müssen, bewegt werden. In sicherer Weise wird der Adapter auf dem Unterlenker befestigt, indem er in dieser Stellung mit dem Unterlenker formschlüssig verbunden ist, wobei er eine Ausnehmung für die formschlüssige Verbindung mit dem Unterlenker aufweist. Da die Verbindung zwischen dem Unterlenker und dem Adapter keine Klemmkräfte benötigt, sind Befestigungsmittel verwendbar, die ohne Werkzeuge gelöst werden können.

Die Vorteile, die sich aus der Anwendung der die Erfindung fortentwickelnden Merkmale gemäß den Unteransprüchen ergeben, sind eingehend in den veröffentlichten Unterlagen dieser Anmeldung beschrieben.

In der Zeichnung sind zwei nachfolgend näher beschriebene Ausführungsbeispiele eines Adapters nach der Erfindung dargestellt. Es zeigt:

Fig. 1 einen Ackerschlepper in Ansicht von hinten,

Fig. 2 eine Ansicht des ersten Ausführungsbeispiels in Blickrichtung der Pfeile der Linie 2 - 2 in Fig. 3,

Fig. 3 das erste Ausführungsbeispiel in Draufsicht und auf einem Unterlenker montiert,

Fig. 4 das weitere Ausführungsbeispiel ebenfalls auf dem Unterlenker montiert,

Fig. 5 eine Vorderansicht des weiteren Ausführungsbeispiels,

Fig. 6 eine schematische Darstellung der mit dem weiteren Ausführungsbeispiel erreichbaren Abstände zwischen dem Unterlenker und dem Ackerschlepper bzw. einer dort angebauten Konsole,

Fig. 7 eine schematische Darstellung der mit dem Ausführungsbeispiel nach Fig. 2 und 3 möglichen Arbeitspositionen,

Fig. 8 eine schematische Darstellung der mit dem Ausführungsbeispiel nach Fig. 4 und 5 möglichen Arbeitspositionen.

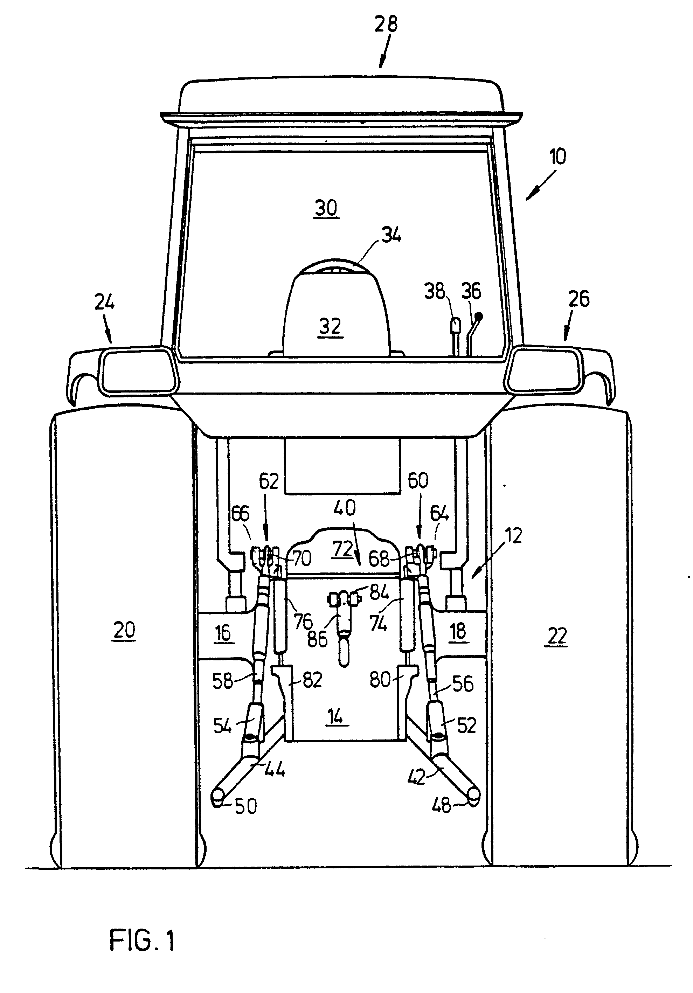

Aus Fig. 1 ist von einem von hinten gezeigten Ackerschlepper 10 im wesentlichen ein Chassis 12, das in seinem rückwärtigen Bereich von einem Getriebegehäuse 14 und daran angeflanschten Achstrichtern 16, 18 gebildet wird, zu sehen. In den Achstrichtern 16, 18 sind Räder 20, 22 über nicht gezeigte Wellen drehbar gelagert, wobei die Räder 20, 22 oben von Abdeckungen 24, 26, die entweder Teile einer Kabine 28 oder an dieser befestigte Teile sein können, abgeschirmt werden. Durch ein Rückfenster 30 der Kabine 28 sind im Kabineninneren hauptsächlich ein Fahrersitz 32, ein Lenkrad 34 und Bedienungshebel 36, 38 für ein nicht gezeichnetes Getriebe bzw. eine hydraulisch betätigbare Dreipunktaufhängung 40 erkennbar.

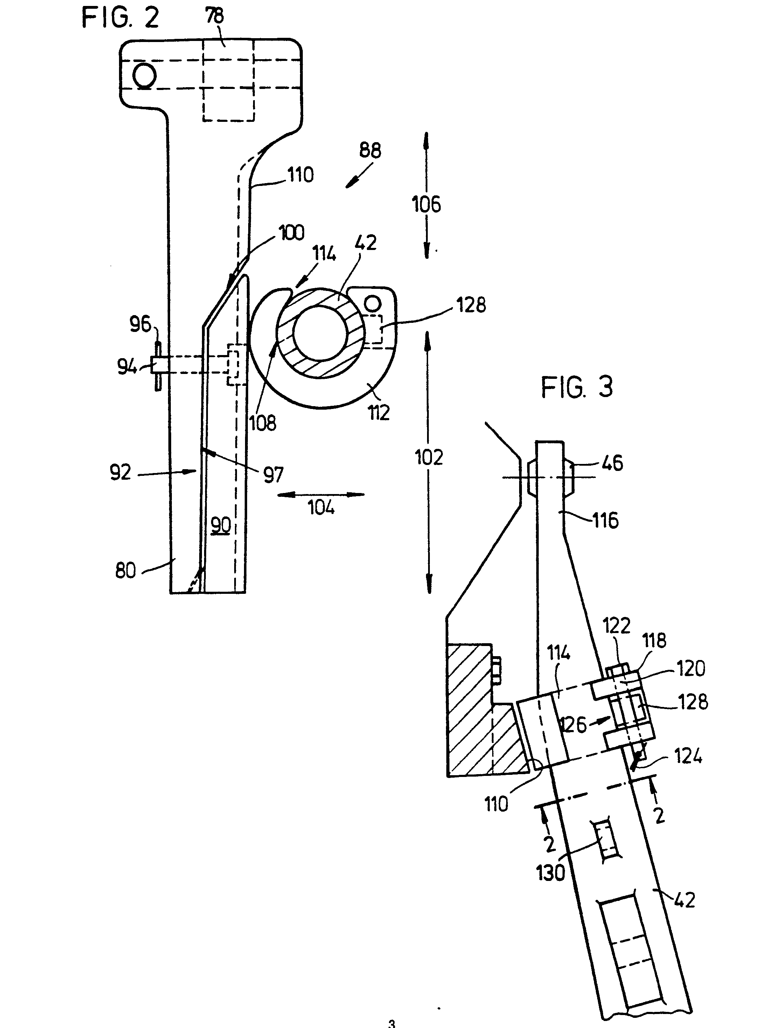

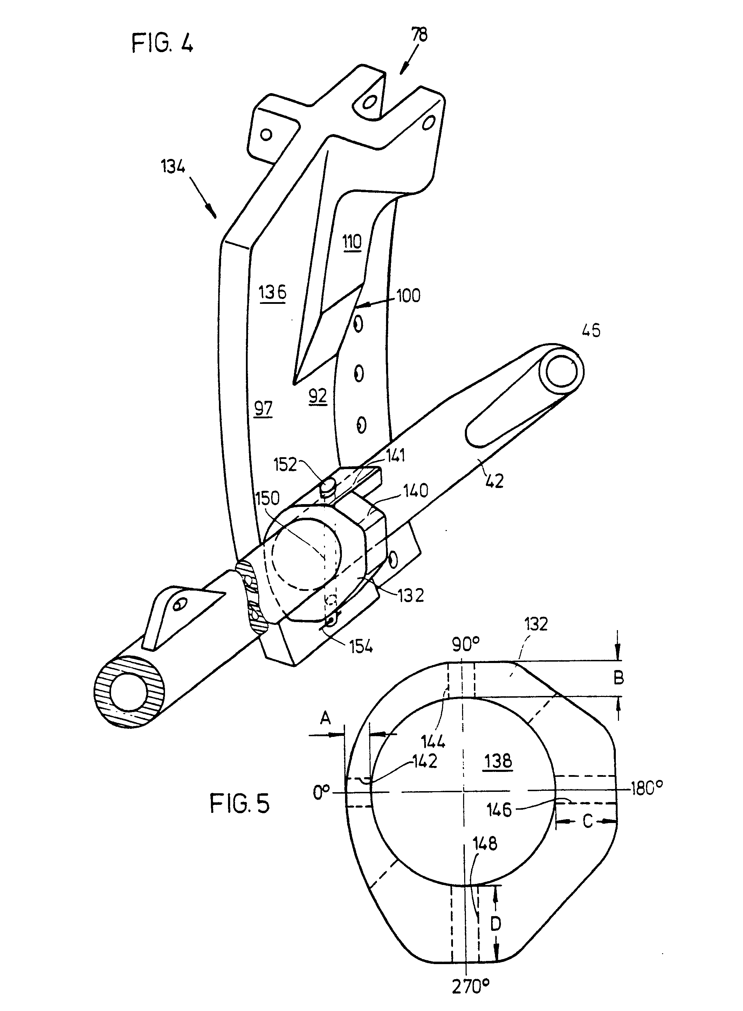

Die Dreipunktaufhängung 40 an sich besteht aus einem rechten und einem linken Unterlenker 42, 44 mit rundem Querschmitt, die an ihrem vorderen Ende über je ein Kugelgelenk 46 (Fig. 3 und Fig. 4) an in der Zeichnung nicht ersichtlichen Enden eines sich durch das Getriebegehäuse 14 quer zur Längsachse des Ackerschleppers erstreckenden Biegestabes schwenkbar befestigt sind. Die Unterlenker 42, 44 tragen an ihrem rückwärtigen Ende je ein Anschlußstück 48, 50 wie einen Schnellkuppelhaken oder ein weiteres Kugelgelenk zum Verbinden mit einem nicht gezeigten anschließbaren Gerät. Etwas vor den Anschlußstücken 48, 50 ist je ein weiteres Gelenk 52, 54 vorgesehen, welches das untere Ende je einer Hubstrebe 56, 58 schwenkbar aufnimmt. Die jeweils oberen Enden der Hubstreben 56, 58 erstrecken sich in an Hubarme 60, 62 angeschmiedete oder angegossene Gabeln 64, 66 und werden dort von Bolzen 68, 70 gehalten. Die Hubarme 60, 62 sind an ihren den Gabeln 64, 66 gegenüberliegenden Enden formschlüssig auf einer in der Zeichnung nicht ersichtlichen Hubwelle befestigt, die in bekannter Weise von einem nicht gezeigten Hubzylinder, der in einem Krafthebergehäuse 72 wirksam ist, in Drehbewegung versetzt wird. Zwischen den gabelseitigen und den hubwellenseitigen Enden ist jeweils ein Zusatzhubzylinder 74, 76 mit den Hubarmen 60, 62 gelenkig verbunden, wobei diese Zusatzhubzylinder 74, 76 an ihren unteren Enden in Ausnehmungen 78, die in am Getriebegehäuse 14 angeflanschten Konsolen 80, 82 vorgesehen sind, eingreifen und dort mittels Bolzen oder Schrauben, die hier der Einfachheit wegen weggelassen wurden, gehalten werden. In der Mitte des Getriebegehäuses 14 zwischen den beiden Zusatzhubzylindern 74, 76 ist schließlich ein in einem Halter 84 aufgenommener Oberlenker 86 in bekannter Ausführung vorgesehen. Selbstverständlich kann anstatt der vorerwähnten Aufhängung der Unterlenker 42, 44 an einem Biegestab, wie er bei einer Unterlenkerregelung Anwendung findet, auch eine Aufhängung an festen mit dem Getriebegehäuse 14 verbundenen Zapfen gewählt werden, wobei dann aber der Oberlenker 86 an eine Regelvorrichtung angeschlossen werden sollte.

Zur weiteren Beschreibung wird nun auf die Figuren 2 und 3 verwiesen, die sich wie später auch die Figuren 4 bis 6 lediglich auf den an der rechten Seite des Getriebegehäuses 14 angeordneten Unterlenker 42 und eine Vorrichtung 88 zum Begrenzen der Seitenbeweglichkeit der Unterlenker 42 beziehen. Die Vorrichtung zum Begrenzen der Seitenbeweglichkeit des linken Unterlenkers 44 ist spiegelbildlich ausgeführt, weshalb auf eine detaillierte Beschreibung der linken Seite der Dreipunktaufhängung verzichtet werden kann.

In Fig. 2 ist die Konsole 80 mit der Ausnehmung 78 und einem Anschlag 90, der in eine Abflachung 92 der Konsole 80 eingesetzt und mittels eines Bolzens 94 und eines Sicherungssteckers 96 dort festlegbar ist, gezeigt. Der Unterlenker 42 ist über die gesamte Länge der Konsole 80 über die Hubstrebe 56 höhenverschwenkbar, wobei er an der oberen Anschlagfläche 110 der Konsole 80 und dem Anschlag 90 vorbeistreicht und dann keine Seitenbeweglichkeit aufweist. Wird der Anschlag durch Entfernen des Bolzens 94 abgebaut, so kann der Unterlenker 42 gegen eine untere Anschlagfläche 97 der Konsole 80 schwingen, d. h. in diesem Bereich ist er seitenbeweglich. Die untere Anschlagfläche 97 geht in die obere Anschlagfläche 110 mittels einer Schräge 100 über, wobei die untere Anschlagfläche 97 dem Arbeitsbereich und die obere Anschlagfläche 110 der Transportstellung entspricht. Die Breite des Anschlages 90 und damit der Freiheitsgrad der Seitenbeweglichkeit ist abhängig von genormten Werten. Da der Anschlag 90 bündig in die Abflachung 92 paßt, besitzt nach dem Anbringen des Anschlages 90 die Konsole 80 über den gesamten Schwenkbereich des Unterlenkers 42 die gleiche Breite. Ein dieser Konsole 80 und dem Anschlag 90 ähnliches System ist ausführlich in der DE-A- 2216652 beschrieben. Nach dem Abnehmen des Anschlages 90 kann der Unterlenker 42 in seiner Arbeitsstellung oder in einem unteren Bereich 102 die durch die Pfeile 104 angedeutete Bewegung ausführen, wie sie beispielsweise bei Pflugarbeiten erforderlich ist. Gegensätzlich hierzu wird er in der Transportstellung oder in einem oberen Bereich 106 an die Konsole 80 angelegt, und eine Seitenbewegung, die bei Transportarbeiten aufgrund der an der Dreipunktaufhängung wirkenden Massenkräfte unerwünscht und gefährlich ist, wird verhindert.

Ist jedoch der Anschlag 90 montiert, dann kann

der Unterlenker 42 bei angeschlossenem Gerät nur eine vertikale, aber keine horizontale Bewegung ausführen, unter der Voraussetzung daß er in seiner Transportstellung mit seiner Innenseite 108 gerade oder fast die obere Anschlagfläche 110 dei Konsolen 80, 82 berührt.

Es wird angenommen, daß diese Forderung beispielsweise bei der Verwendung von Anbaugeräten mit Anschlußmaßen gemäß der Kategorie II erfüllt ist. Wird jedoch, wie es bei Ackerschleppern mit einer Leistung ab 66 kW möglich ist, ein Gerät mit größeren Anschlußmaßen als denen der Kategorie II angekuppelt, obwohl die Dreipunktaufhängung 40 des Ackerschleppers 10 nach den Anschlußmaßen der Kategorie II ausgelegt ist, dann können die Unterlenker 42, 44 nach der vorstehenden Annahme sogar in ihrer Transportstellung eine Seitenbewegung um den Differenzbetrag der Unterlenkerabstandsmaße von Kategorie II und III gemessen an den Konsolen 80, 82 ausführen. Zur Vermeidung des Seitenspiels bei dem Wechsel zu einer größeren Kategorie wird daher ein erfindungsgemäßer Adapter 112 auf den Unterlenker 42 aufgesteckt, der in der Form eines zu einer Seite offenen Ringes ausgebildet ist, wobei die Öffnung mit 114 bezeichnet ist. Dieser Adapter 112 weist zumindest in dem der Konsole 80 zugelegenen Bereich eine Wandstärke auf, die dem halben Differenzbetrag zwischen dem Abstand der Innenseiten 108 der Unterlenker 42, 44 voneinander bei Kategorie II und III gemessen an den Konsolen 80, 82 entspricht. Die Öffnung 114 dient einmal dazu, den Adapter 112 bei in der Regel angebautem Unterlenker 42 an dessen getriebeseitigen Ende über eine dort vorgesehene Verjüngung 116 schieben zu können. An einer Seite der Öffnung 114 ist der Adapter 112 derart aufgeschnitten, daß er infolge der dadurch entstehenden Ausnehmung 126 eine Gabel 118 bildet, die in Richtung der Längsachse des Unterlenkers 42 von einer Bohrung 120 zur Aufnahme eines Sicherungsstifts 122, der von einem Splint 124 axial gehalten wird, durchdrungen ist. Auf dem Unterlenker 42 ist eine Nase 128 für eine erste Stellung oder Betriebsstellung und eine Nase 130 für eine weitere Stellung oder Außerbetriebsstellung fest angeordnet, die jeweils in der Ausnehmung 126 der Gabel 118 aufgenommen werden können. Dabei ist die Bohrung 120 in der Gabel 118 derart angebracht, daß bei eingesetztem Sicherungsstift 122 der Adapter 112 relativ spielfrei auf dem Unterlenker 42 durch die jeweilige Nase 128 oder 130 gehalten wird. Die Nase 128 für die Betriebsstellung ist derart angeordnet, daß sie bei demontiertem Adapter 112 den Freiheitsgrad des Unterlenkers 42 nicht beeinträchtigt und bei montiertem Adapter 112 die gewollte Wandstärke gegen die Konsole 80 zu liegen kommt. Die Nase 130 für die Außerbetriebsstellung ist so angeordnet, daß in der Außerbetriebsstellung des Adapters 112 der Freiraum zwischen den Innenseiten 108 der Unterlenker 42, 44 nicht eingeschränkt wird, d. h. der Adapter 112 zeigt mit seiner Öffnung 114 gegen die Konsole 80, wobei die Öffnung 114 andererseits so ausgebildet ist, daß sie mit dem Unterlenker 42 tangential abschließt. Selbstverständlich braucht bei genügendem Freiraum des Unterlenkers 42 die Öffnung 114 des Adapters 112 nicht tangential abzuschließen, sondern der Adapter 112 kann in dem der Konsole 80 zugewandten Bereich eine geringere radiale Erstreckung aufweisen oder in gleichbleibender Wandstärke durchgeführt werden. Die Nase 130 für die Außerbetriebsstellung ist mindestens eine Adapterbreite von der Nase 128 für die Betriebsstellung axial entfernt. Die Breite bzw. die axiale Erstreckung des Adapters 112 sollte ungefähr der Breite der Anschlagflächen 97 bzw. der Konsole 80 entsprechen.

Aus den Figuren 2 und 3 ist ersichtlich, daß der Adapter 112 zu seiner Verwendung in der Betriebsstellung, sofern er sich noch nicht auf dem Unterlenker 42 befindet, zunächst über die Verjüngung 116 auf den Unterlenker 42 aufgesteckt, gegebenenfalls gedreht, damit er nach hinten bis über die Nase 128 für die Betriebsstellung geschoben werden kann, und wiederum zurückgedreht wird, bis er diese mit der Ausnehmung 126 umgreift, um schließlich mit dem Sicherungsstift 122 gesichert werden zu können. Wird der Adapter 112 nicht in der Betriebsstellung benötigt, dann ist er in seine Außerbetriebsstellung bringbar, indem er nach Entfernen des Sicherungsstifts 122 so gedreht wird, daß er außer Eingriff mit der Nase 128 für die Betriebsstellung gelangt, nach hinten geschoben, in Eingriff mit der Nase 130 für die Außerbetriebsstellung gebracht und dort gesichert wird. Dies setzt voraus, daß die Öffnung 114 in ihrer Breite mindestens der Breite der Verjüngung 116 wie auch der Breite der jeweiligen Nasen 128, 130 entspricht.

Die Dimensionierung des Adapters 112 mit Bezug auf den Unterlenker 42 soll so erfolgen, daß bei Einwirkung von Schmutz und Wasser oder anderer Einflüsse ein Festfressen oder Festrosten des Adapters 112 auf dem Unterlenker 42 nicht erfolgen kann.

Die Verwendung des Splints 124, der ein gewöhnlicher Klapp- oder Federstecker sein kann, mit dem Sicherungsstift 122 gestattet es dem Bedienenden, den Adapter 112 in seine verschiedenen Stellungen ohne den Gebrauch jeglichen Werkzeuges zu bringen. Im Ausführungsbeispiel befindet sich die Nase 128 für die Betriebsstellung an der Konsole 80 abgelegenen Seite des Unterlenkers 42, und die Nase 130 für die Außerbetriebsstellung ist zu ihr um 90° versetzt. Um ein mögliches Verbiegen des Adapters 112 mit Sicherheit zu vermeiden, kann die Öffnung 114 durch ein entsprechendes Segment geschlossen werden. In einem solchen Fall kann auf den Sicherungsstift 122 verzichtet werden, da dann das Segment bis in die Ausnehmung 126 vor die entsprechende Nase 128, 130 reicht. Natürlich ist das Segment dabei gegen Herausfallen entsprechend zu sichern.

Die Nase 130 für die Außerbetriebsstellung ist allerdings nur dann erforderlich, wenn der Adapter 112 in seiner Außerbetriebsstellung auf dem Unterlenker verbleibt. Ist die Nase 130 vorgesehen und der Adapter 112 in seiner Außerbetriebsstellung mit ihr verbunden, dann ist, um ihn in seine Betriebsstellung zu bringen, in umgekehrter Reihenfolge, wie sie vorher bei dem Bewegen von der Betriebsstellung in die Außerbetriebsstellung beschrieben wurde, vorzugehen.

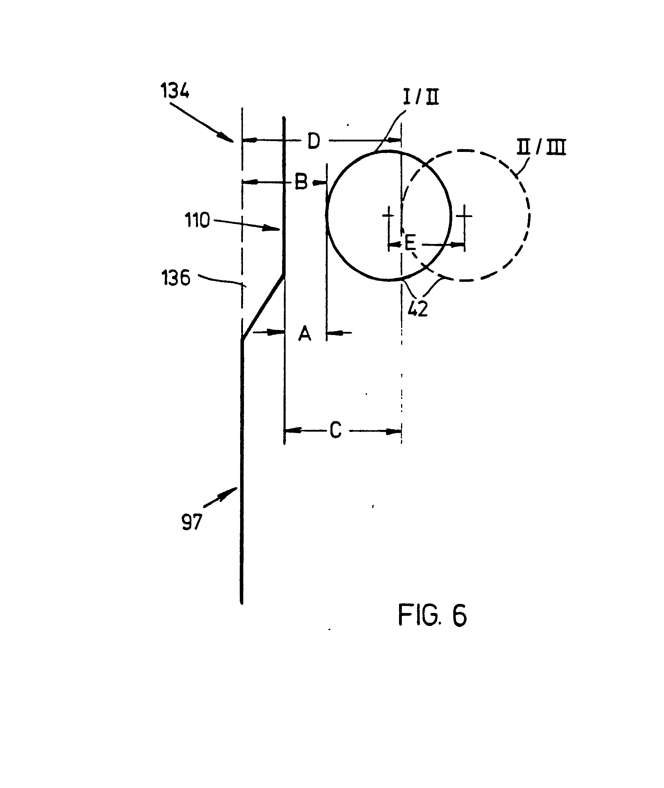

In den Figuren 4 und 5 ist ein weiteres Beispiel einer Vorrichtung zum Begrenzen des Seitenspiels der Unterlenker 42, 44 dargestellt. Soweit gleiche Teile wie in dem zuvor beschriebenen Ausführungsbeispiel Verwendung finden, werden die gleichen Bezugszeichen auch weiter benutzt.

Zum Begrenzen des Seitenspiels des Unterlenkers 42 wird nun ein Drehadapter 132 und eine Gleitkonsole 134 verwendet, wobei letztere der Konsole 80 im wesentlichen entspricht, aber noch eine sich rückwärtig erstreckende Gleitfläche 136 besitzt, die sich über die gesamte Länge der Gleitkonsole 134 erstreckt und die in der Stärke der Gleitkonsole 134 an ihrem unteren Ende über ihre gesamte Länge ausgebildet ist.

Der Drehadapter 132 weist eine Längsbohrung 138 auf, die in ihrem Durchmesser ungefähr dem Außendurchmesser des runden Unterlenkers 42 entspricht. Der Drehadapter 132 ist außen vollkommen unrund, weshalb er im folgenden unter Zuhilfenahme einer Gradeinteilung beschrieben wird.

Der Drehadapter 132 weist hauptsächlich vier um jeweils 90° versetzte Wandstärken auf, die den Abstand des Unterlenkers 42 bzw. 44 entweder zu der Gleitfläche 136 oder zu der oberen Anschlagfläche 110 für die Transportstellung an der Gleitkonsole 134 oberhalb der Abflachung 92 bestimmen.

Ausgehend von einer Wandstärke A, die einem Mindestmaß für die Herstellung des Drehadapters 132 entspricht und die bei 0° gelegen sein soll, folgt eine Wandstärke B bei 90°, die der Wandstärke A plus einem Maß entsprechend dem halben Differenzbetrag zwischen dem Abstand der Innenseiten 108 der Unterlenker 42, 44 voneinander bei Kategorie II und III oder Kategorie I und II gemessen an den Gleitkonsolen 134 entspricht. Bei 180° ist eine Wandstärke C vorgesehen, die sich aus der Wandstärke A und der Stärke der Abflachung 92 zusammensetzt. Letztlich weist der Drehadapter bei 270° eine Wandstärke D auf, die sich aus der Wandstärke C und dem halben Differenzbetrag zwischen dem Abstand der Innenseiten 108 der Unterlenker 42, 44 voneinander bei Kategorie II und III oder Kategorie I und II gemessen an den Gleitkonsolen 134 zusammensetzt.

Im Bereich zwischen 135° und 315° weist der Drehadapter 132 eine axiale Erstreckung 140 entsprechend der Länge der Gleitfläche 136 in der Ackerschlepperlängsrichtung auf, während er im restlichen Bereich eine axiale Erstreckung 141 entsprechend der gesamten Länge der Gleitkonsole 134 in Ackerschlepperlängsrichtung besitzt, also entsprechend der Länge der Gleitfläche 136 plus der Länge der Abflachung 92 bzw. der Anschlagfläche 110.

Zum Arretieren des Drehadapters 132 auf dem Unterlenker 42 bzw. 44 dienen jeweils eine bei 0°, 90°, 180° und 270° gefertigte Bohrung 142, 144, 146, 148 sowie eine radial durch den Unterlenker 42 führende und zu der Gleitfläche 136 parallele Bohrung 150. Je nach Wahl der Verbindung einer der Bohrungen 142 bis 148 des Drehadapters 132 und der Bohrung 150 im Unterlenker 42 mittels eines Bolzens 152 und eines Splints 154 ist ein bestimmtes Schwenkverhalten des Unterlenkers 42 gegenüber der Gleitkonsole 134 erzielbar. Die Bohrungen 142 bis 148 sind so angeordnet, daß der Bolzen 152 entweder durch die Bohrungen 142 und 146 oder durch die Bohrungen 144 und 148 gesteckt werden kann. Es ist auch denkbar, den Drehadapter 132 mittels einer Nase-Gabel-Verbindung ähnlich der Befestigung des Adapters 112 auf dem Unterlenker 42 festzulegen, wodurch die den Unterlenker 42 durchdringende Bohrung 150 wegfällt. Andere Feststellmethoden sind ebenfalls realisierbar. Die Befestigung des Adapters 112 nach dem ersten Ausführungsbeispiel kann auch wie die des Drehadapters 132, also mittels eines den Unterlenker 42 durchdringenden Bolzens, der in entsprechende Bohrungen in dem Adapter 112 eingreift, erfolgen.

Mit diesem Drehadapter 132 sind folgende vier Betriebsarten ohne den im ersten Ausführungsbeispiel verwendeten Anschlag 90 möglich:

1. Eine freie horizontale Schwenkbewegung des Unterlenkers 42 nur in der Arbeitsstellung bzw. im unteren Bereich 102 bei Kategorie I oder II durch Drehen des Drehadapters 132 derart, daß die Wandstärke A zwischen dem Unterlenker 42 und der Gleitkonsole 134 zu liegen kommt.

2. Eine freie horizontale Schwenkbewegung des Unterlenkers 42 nur im unteren Bereich 102 bei Kategorie II oder III durch Drehen des Drehadapters 132 derart, daß die Wandstärke B zwischen dem Unterlenker 42 und der Gleitkonsole 134 zu liegen kommt.

3. Eine horizontale Schwenkbewegung des Unterlenkers 42 wird im unteren und oberen Bereich 102, 106 bzw. der Transportstellung bei Kategorie I oder II verhindert durch Drehen des Drehadapters 132 derart, daß die Wandstärke C zwischen dem Unterlenker 42 und der Gleitkonsole 134 zu liegen kommt.

4. Eine horizontale Schwenkbewegung des Unterlenkers 42 im unteren und oberen Bereich 102, 106 bei Kategorie II oder III wird verhindert durch Drehen des Drehadapters 132 derart, daß die Wandstärke D zwischen dem Unterlenker 42 und der Gleitkonsole 134 zu liegen kommt.

Bei der ersten und der zweiten Betriebsart wird die Seitenbeweglichkeit des Unterlenkers 42 in der Transportstellung verhindert, da sich dort der Drehadapter 132 über die gesamte Länge der Gleitkonsole 134 in Ackerschlepperlängsrichtung erstreckt und somit gegen die Anschlagfläche 110 zur Anlage kommt. Bei der dritten und der vierten Betriebsart wird eine Seitenbeweglichkeit des Unterlenkers 42 in der Arbeits- wie auch der Transportstellung 102, 106 verhindert, da der Drehadapter 132 aufgrund seiner kürzeren axialen Erstreckung 140 und seiner größeren Wandstärken C und D über den gesamten Schwenkbereich des Unterlenkers 42 auf der Gleitfläche 136 und vorbei an der Schräge 100 gleitet.

Zur Verdeutlichung ist in Fig. 6 nochmals der Bezug zwischen den Wandstärken A, B, C und D und den sich daraus ergebenden Abständen des Unterlenkers 42 zu der am Ackerschlepper angebauten Gleitkonsole 134 schematisch dargestellt. Dabei entsprechen die Wandstärken A und B dem Abstand von dem Unterlenker 42 zu der oberen wie der unteren Anschlagfläche 110 bzw. 97 der Gleitkonsole 134 bei Kategorie I und II

Die Wandstärken C und D hingegen entsprechen dem Abstand von dem Unterlenker 42 zu der Anschlagfläche 97, die sich mit der Gleitfläche 136 entsprechend der strichlinierten Linie bis zum oberen Ende der Gleitkonsole 134 erstreckt und der Anschlagfläche 110 bei Kategorie II und III. Die angedeutete Strecke E entspricht dem halben Differenzbetrag zwischen dem Abstand der Innenseiten 108 der Unterlenker 42, 44 voneinander bei Kategorie II und III oder Kategorie I und II gemessen an der Gleitkonsole 134.

Die Anwendung des Adapters 112 und des Drehadapters 132 ist nicht auf die Anwendung bei Unterlenkern mit rundem Querschnitt beschränkt, sondern auch bei Flachstahlunterlenkern denkbar. Im letzteren Falle wäre jedoch der links und rechts des Flachstahlunterlenkers zwischen diesem und dem Adapter 112 oder Drehadapter 132 vorhandene Freiraum durch axial zu sichernde kreisabschnittförmige Einsätze auszufüllen.

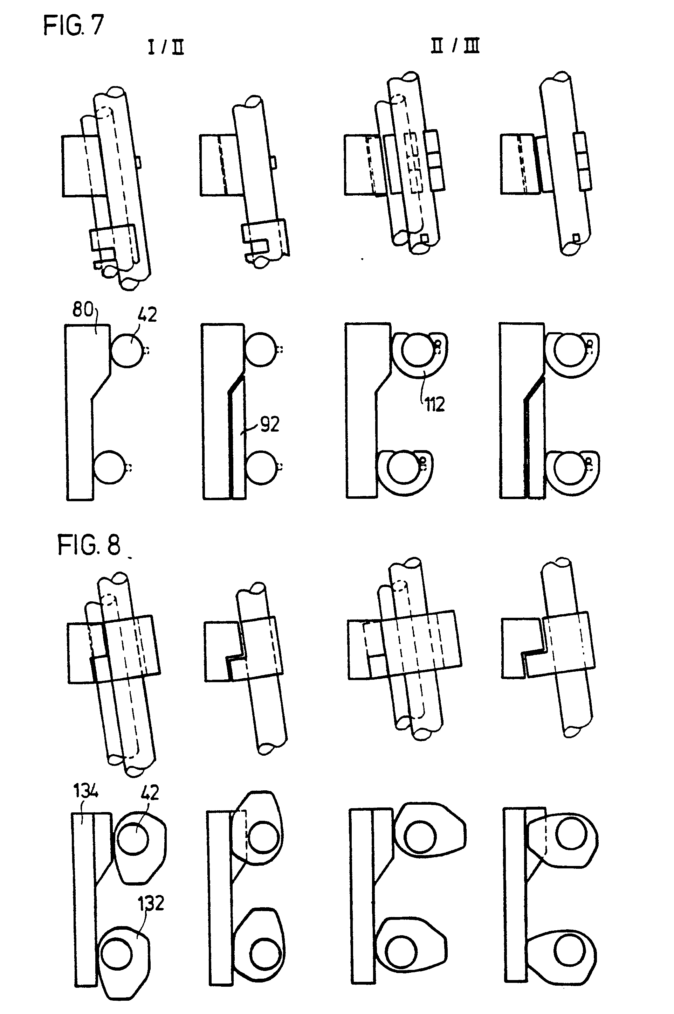

In Fig. 7 und 8 sind zusammenfassend und schematisch die verschiedenen, möglichen Stellungen des Unterlenkers 42 bei Verwendung des Adapters 112 und des Drehadapters 132 bei Kategorie I oder II (Spalte 1 und 2) bzw. Kategorie II oder III (Spalte 3 und 4) aufgezeigt.

Die Begriffe links, rechts, vorne, hinten, oben und unten beziehen sich auf die Vorwärtsfahrtrichtung des Ackerschleppers.

Letztlich wird darauf hingewiesen, daß die Auswahl der Kategorien nur beispielsweise erfolgt ist und auch andere Abmessungen von Geräteanschlußmaßen der Ausführung zugrunde gelegt werden können.

## Patentansprüche

1. Vorrichtung zum Ausschalten der Seitenbeweglichkeit von Unterlenkern (42, 44), die dem wahlweisen Anschließen von Geräten mit unterschiedlichen Anschlußmaßen an einen Ackerschlepper (10) dienen, oder dergleichen, mit einem Adapter (112, 132), der an dem Ackerschlepper (10) zur Anlage bringbar ist, und mit einem Befestigungsmittel (122 bis 130 und 152, 154), wobei der Adapter (112, 132) in der Form eines Ringes mit unterschiedlichen Wandstärken ausgebildet ist, so daß er einen Unterlenker (42, 44) umgreifen kann, und in mindestens zwei Stellungen gegenüber dem Unterlenker (42, 44) drehbar, verschiebbar und in jeder Stellung mittels des Befestigungsmittels (122 bis 130 und 152, 154) auf dem Unterlenker (42, 44) festlegbar ist, dadurch gekennzeichnet, daß der Adapter (112, 132) einstückig ist und eine Längsbohrung (138) aufweist, die in ihrem Querschnitt ungefähr dem größten Querschnitt des Unterlenkers (42, 44) entspricht, so daß er den Unterlenker (42, 44) umgebend relativ spielfrei auf ihm um seine Längsachse drehbar und entlang dieser verschiebbar ist, und daß das Befestigungsmittel (122 bis 130 und 152, 154) formschlüssig ausgebildet und ohne Werkzeug demontierbar ist.

2. Vorrichtung nach Anspruch 1, dadurch gekennzeichnet, daß der Adapter (112, 132) eine Ausnehmung (126, 148) für die formschlüssige Verbindung mit dem Unterlenker (42, 44) aufweist.

3. Vorrichtung nach Anspruch 1 oder 2, dadurch gekennzeichnet, daß der Adapter (112) in der Form eines einseitig offenen Ringes ausgebildet ist.

4. Vorrichtung nach einem oder mehreren der vorherigen Ansprüche, dadurch gekennzeichnet, daß der als einseitig offener Ring ausgebildete Adapter (112) an einem seiner offenen Enden mindestens eine Ausnehmung (126) zur Aufnahme eines am Unterlenker (42, 44) angeordneten Halteelements (128, 130) aufweist.

5. Vorrichtung nach einem oder mehreren der vorherigen Ansprüche 3 und 4, dadurch gekennzeichnet, daß die Ausnehmung (126) am offenen Ende des Adapters (112) die Form einer Gabel aufweist.

6. Vorrichtung nach einem oder mehreren der vorherigen Ansprüche, dadurch gekennzeichnet, daß der Adapter (112, 132) zur Aufnahme eines Sicherungsstifts (122, 152) aufgebohrt ist.

7. Vorrichtung nach einem oder mehreren der vorherigen Ansprüche 4-6, dadurch gekennzeichnet, daß eine sich zwischen den beiden offenen Enden des Adapters (112) ergebende Offnung (114) eine Breite aufweist, die der Breite des Halteelements (128, 130) und des Unterlenkers (42, 44) an einem seiner Enden entspricht.

8. Vorrichtung nach einem oder mehreren der vorherigen Ansprüche 4-7, dadurch gekennzeichnet, daß der Unterlenker (42, 44) ein weiteres Halteelement (130) für eine weitere Stellung aufweist.

9. Vorrichtung nach einem oder mehreren der vorherigen Ansprüche 3-8, dadurch gekennzeichnet, daß der Adapter (112) an seinen offenen Enden tangential mit dem Unterlenker (42, 44) abschließt.

10. Vorrichtung nach Anspruch 1, dadurch gekennzeichnet, daß der Adapter (132) in mindestens vier verschiedenen Stellungen auf dem Unterlenker (42, 44) befestigt werden kann.

11. Vorrichtung nach Anspruch 1 oder 10, dadurch gekennzeichnet, daß der Adapter (132) eine Wandstärke A für eine freie Schwenkbewegung in einem unteren Bereich (102) für Geräte mit engen Anschlußmaßen, eine Wandstärke B für eine freie Schwenkbewegung in dem unteren Bereich (102) für Geräte mit weiten Anschlußmaßen, eine Wandstärke C zum Verhindern einer Schwenkbewegung in dem unteren und einem oberen Bereich (102, 106) bei Geräten mit engen Anschlußmaßen und eine Wandstärke D zum Verhindern einer Schwenkbewegung in dem unteren und dem oberen Bereich (102, 106) bei Geräten mit weiten Anschlußmaßen aufweist.

12. Vorrichtung nach einem oder mehreren der vorherigen Ansprüche, dadurch gekennzeichnet, daß der Adapter (132) unterschiedliche axiale Erstreckungen (140, 141) aufweist.

13. Vorrichtung nach Anspruch 12, wobei der Adapter (132) gegen eine an dem Ackerschlepper (10) befestigte Konsole (134) zur Anlage bringbar ist, dadurch gekennzeichnet, daß die Konsole (134) eine vordere und eine rückwärtige nahezu vertikal verlaufende Gleitfläche (136, 92) aufweist, wobei in Richtung der Ackerschlepperlängsachse gesehen die eine axiale Erstreckung des Adapters (132) der Breite der einen Gleitfläche (136) entspricht, während die andere axiale Erstreckung der Breite beider Gleitflächen (136 und 92) entspricht.

14. Vorrichtung nach einem oder mehreren der vorherigen Ansprüche 3-13, dadurch gekennzeichnet, daß die Lage des ersten und des weiteren Halteelements (128, 130) die Lage des Adapters (112, 132) in den jeweiligen Stellungen bestimmt.

## Claims

1. A device for eliminating sideways mobility of lower links (42, 44) which are provided for selectively connecting implements with different connection dimensions to an agricultural tractor (10), or the like, comprising an adapter (112, 132) which can be brought into contact against the tractor (10), and a fixing means (122 to 130 and 152, 154), wherein the adapter (112, 132) is in the form of a ring with different wall thicknesses so that it can engage around a lower link (42, 44) and is rotatable into at least two positions with respect to the lower link (42, 44) and slidable thereon and can be fixed on the lower link (42, 44) in any position by means of the fixing means (122 to 130 and 152, 154) characterised in that the adapter (112, 132) is in one piece and has a longitudinal bore (138) which approximately corresponds in its cross-section to the largest cross-section of the lower link (42, 44) so that in a condition of embracing the lower link (42, 44) it is rotatable thereon about its longitudinal axis and slidable therealong in a relatively play-free manner, and that the fixing means (122 to 130 and 152, 154) is of a positive-engagement configuration and can be dismantled without a tool.

2. A device according to claim 1 characterised in that the adapter (112, 132) has an opening (126, 148) for positive connection to the lower link (42, 44).

3. A device according to claim 1 or claim 2 characterised in that the adapter (112) is in the form of a ring which is open at one side.

4. A device according to one or more of the preceding claims characterised in that the adapter (112) in the form of a ring which is open at one side is provided at one of its open ends with at least one opening (126) for accommodating a holding element (128, 130) provided on the lower link (42, 44).

5. A device according to one or more of preceding claims 3 and 4 characterised in that the opening (126) at the open end of the adapter (112) is in the form of a fork.

6. A device according to one or more of the preceding claims characterised in that the adapter (112, 132) is bored to receive a securing pin (122, 152).

7. A device according to one or more of preceding claims 4 to 6 characterised in that an aperture (114) between the two open ends of the adapter (112) is of a width which corresponds to the width of the holding element (128, 130) and the lower link (42, 44) at one of its ends.

8. A device according to one or more of preceding claims 4 to 7 characterised in that the lower link (42, 44) has a further holding element (130) for a further position.

9. A device according to one or more of preceding claims 3 to 8 characterised in that at its open ends the adapter (112) terminates tangentially with the lower link (42, 44).

10. A device according to claim 1 characterised in that the adapter (132) can be fixed on the lower link (42, 44) in at least four different positions.

11. A device according to claim 1 or claim 10 characterised in that the adapter (132) has a wall thickness A for a free pivotal movement in a lower region (102) for implements with narrow connection dimensions, a wall thickness B for a free pivotal movement in the lower region (102) for implements with wide connection dimensions, a wall thickness C for preventing a pivotal movement in the lower and an upper region (102, 106) in relation to implements with narrow connection dimensions and a wall thickness D for preventing a pivotal movement in the lower and the upper regions (102, 106) in relation to implements with wide connection dimensions.

12. A device according to one or more of the preceding claims characterised in that the adapter (132) is of different axial extents (140, 141).

13. A device according to claim 12 wherein the adapter (132) can be brought into a position of bearing against a bracket (134) fixed to the tractor (10) characterised in that the bracket (134) has a front and a rearward approximately vertically extending sliding surface (136, 92) wherein as considered in the direction of the longitudinal axis of the tractor the one axial extent of the adapter (132) corresponds to the width of the one sliding surface (136) while the other axial extent corresponds to the width of both sliding surfaces (136 and 92).

14. A device according to one or more of preceding claims 8 to 13 characterised in that the location of the first and the further holding elements (128, 130) defines the location of the adapter (112, 132) in the respective positions.

**Revendications**

1.- Dispositif pour supprimer la mobilité latérale des barres inférieures (42, 44) qui servent au raccordement sélectif d'instruments de cotes de raccordement ou d'attelage différentes à un tracteur agricole (10) ou analogue, comportant un adaptateur (112, 132) pouvant être mis en contact avec le tracteur agricole (10), et un organe de fixation (122 à 130 et 152, 154), l'adaptateur (112, 132) étant réalisé sous la forme d'un anneau à épaisseurs de paroi différentes, de sorte qu'il peut entourer une barre inférieure (42, 44) et peut, dans au moins deux positions, tourner, coulisser par rapport à la barre inférieure (42, 44) et, dans chaque position, être fixé sur la barre inférieure (42, 44) à l'aide de l'organe de fixation (122 à 130 et 152, 154), caractérisé en ce que l'adaptateur (112, 132) est réalisé d'un seul tenant et comporte un alésage longitudinal (138) dont la section droite correspond sensiblement à la plus grande section droite de la barre inférieure (42, 44), de sorte qu'il peut tourner, en entourant la barre inférieure (42, 44) relativement sans jeu sur elle autour de son axe longitudinal et coulisser le long de celui-ci, et en ce que l'organe de fixation (122 à 130 et 152, 154) est réalisé dans une forme concordante et peut être démonté sans outils.

2.- Dispositif suivant la revendication 1, caractérisé en ce que l'adaptateur (112, 132) comporte un évidement (ou cavité) (126, 148) pour le raccordement avec concordance de forme avec la barre inférieure (42, 44).

3.- Dispositif suivant la revendication 1 ou 2, caractérisé en ce que l'adaptateur (112) se présente sous la forme d'un anneau ouvert d'un côté.

4.- Dispositif suivant une ou plusieurs des revendications précédentes, caractérisé en ce que l'adaptateur (112) conformé en anneau ouvert d'un côté comporte, à l'une de ses extrémités ouvertes au moins un évidement (126) pour recevoir un élément de retenue (128, 130) placé sur la barre inférieure (42, 44).

5.- Dispositif suivant une ou plusieurs des revendications 3 et 4 précédentes, caractérisé en ce que l'évidement (126) présente, à l'extrémité ouverte de l'adaptateur (112), la forme d'une fourche.

6.- Dispositif suivant une ou plusieurs des revendications précédentes, caractérisé en ce que l'adaptateur (112, 132) est alésé pour recevoir une goupille de sécurité (122, 152).

7.- Dispositif suivant une ou plusieurs des revendications 4 à 6 précédentes, caractérisé en ce qu'une ouverture (114) formée entre les deux extrémités ouvertes de l'adaptateur (112) présente une largeur qui correspond à la largeur de l'élément de retenue (128, 130) et de la barre inférieure (42, 44), à l'une de ses extrémités.

8.- Dispositif suivant une ou plusieurs des revendications 4 à 7 précédentes, caractérisé en ce que la barre inférieure (42, 44) comporte un autre élément de retenue (130) pour une autre position.

9.- Dispositif suivant une ou plusieurs des revendications 3 à 8 précédentes, caractérisé en ce que l'adaptateur (112) se raccorde tangentiellement avec la barre inférieure (42, 44) à ses extrémités ouvertes.

10.- Dispositif suivant la revendication 1, caractérisé en ce que l'adaptateur (132) peut être fixé dans au moins quatre positions différentes sur la barre inférieure (42, 44).

11.- Dispositif suivant la revendication 1 ou 10, caractérisé en ce que l'adaptateur (132) présente une épaisseur de paroi A pour un mouvement de pivotement libre dans une zone inférieure (102) pour des instruments à cotes de raccordement étroites, une épaisseur de paroi B pour un mouvement de pivotement libre dans la zone inférieure (102) pour des instruments à cotes de raccordement larges, une épaisseur de paroi C pour empêcher un mouvement de pivotement dans la zone inférieure (102) et une zone supérieure (106) pour des instruments à des cotes de raccordement étroites et une épaisseur de paroi D pour empêcher un mouvement de pivotement dans la zone inférieure (102) et la zone supérieure (106) pour des instruments à cotes de raccordement larges.

12.- Dispositif suivant une ou plusieurs des revendications précédentes, caractérisé en ce que l'adaptateur (132) présente des étendues axiales (140, 141) différentes.

13.- Dispositif suivant la revendication 12, l'adaptateur (132) pouvant être amené au contact d'une console (134) fixée au tracteur agricole (10), caractérisé en ce que la console (134) comporte une surface de glissement antérieure et une surface de glissement postérieure dirigée sensiblement verticalement (136, 92), l'une des étendues axiales de l'adaptateur (132) correspondant, en observant dans la direction de l'axe longitudinal du tracteur agricole, à la largeur de l'une des surfaces de glissement (136), tandis que l'autre étendue axiale correspond à la largeur des deux surfaces de glissement (136 et 92).

14.- Dispositif suivant une ou plusieurs des revendications 8 à 13 précédentes, caractérisé en ce que la position du premier élément de retenue (128) et du second élément de retenue (130) détermine la position de l'adaptateur (112, 132) dans les positions respectives.

FIG. 1

FIG. 2

78

88

106

110

100

114    42

128

96

94

108    112

102

FIG. 3

92    97

104

90

46

80    116

122    118

114    120

128

126

124

110    2

2

130

42

FIG. 4

78

134

110

136

100

46

92

97

152

141

150

140

42

132

154

132

90°

B

A

144

142

138

0°

180°

146

C

FIG. 5

148

D

270°

FIG. 6

# FIG. 7

I / II                    II / III

80   42

92

112

# FIG. 8

134   42

132